# EUROPEAN PATENT SPECIFICATION

(11) **EP 4 117 250 B1**
(45) Date of publication and mention of the grant of the patent: **25.02.2026**
(21) Application number: 20925525.6
(22) Date of filing: 17.11.2020
(51) Int. Cl.: H04W 76/27, H04W 76/38, H04W 36/00, H04W 52/02

(54) **STATE SWITCHING CONTROL METHOD AND APPARATUS, ELECTRONIC DEVICE, AND STORAGE MEDIUM**
STATUSUMSCHALTUNGSSTEUERUNGSVERFAHREN UND -VORRICHTUNG, ELEKTRONISCHE VORRICHTUNG UND SPEICHERMEDIUM
PROCÉDÉ ET APPAREIL DE COMMANDE DE COMMUTATION D'ÉTAT, DISPOSITIF ÉLECTRONIQUE, ET SUPPORT D'INFORMATIONS

(30) Priority: 19.03.2020 CN 202010197599
(43) Date of publication of application: 11.01.2023
(73) Proprietor: ZTE Corporation, Shenzhen, Guangdong 518057 (CN)
(72) Inventor: CAO, Yijin, Shenzhen, Guangdong 518057 (CN)
(74) Representative: Swindell & Pearson Limited
(86) International application number: PCT/CN2020/129446
(87) International publication number: WO 2021/184797

(56) References cited:
- WO-A1-2019/160266
- CN-A- 108 282 836
- ANONYMOUS: "3rd Generation Partnership Project; Technical Specification Group Radio Access Network; Evolved Universal Terrestrial Radio Access (E-UTRA) and NR; Multi-connectivity; Stage 2 (Release 16)", 3GPP TS 37.340 V16.1.0, 1 March 2020 (2020-03-01), XP055877604, Retrieved from the Internet <URL:http://www.3gpp.org> [retrieved on 20220111]
- NOKIA: "Inactivity timer for eDRX", vol. SA WG2, no. Sophia Antipolis, FR; 20160411 - 20160415, 5 April 2016 (2016-04-05), XP051086577, Retrieved from the Internet <URL:http://www.3gpp.org/ftp/tsg_sa/WG2_Arch/TSGS2_114_Sophia_Antipolis/Docs/> [retrieved on 20160405]
- ALCATEL-LUCENT ET AL: "Text Proposals for handling user inactivity in dual connectivity release 13", vol. RAN WG3, no. Fukuoka, Japan; 20150525 - 20150529, 15 May 2015 (2015-05-15), XP050969414, Retrieved from the Internet <URL:http://www.3gpp.org/ftp/tsg_ran/WG3_Iu/TSGR3_88/Docs/> [retrieved on 20150515]

## Description

### TECHNICAL FIELD

The present disclosure relates to the technical field of wireless communication networks, in particular to a method and device for controlling state transition, an electronic apparatus, and a storage medium.

### BACKGROUND

With the issuance of 5G licenses, 5G networks have been commercialized in China. However, the infrastructure of 4G and Long-Term Evolution (LTE) in telecommunications is being widely deployed, and it is believed that the 5G networks will be supported by the existing 4G infrastructure for a long time to come. Thus, Non-standalone (NSA) networking will be widely utilized in the deployment of 5G New Radio (NR) networks. The NSAnetworking of the 5G is established based on the existing 4G base station and network infrastructure where 5G networks are deployed.

Under the NSA networking, when the User Equipment (UE) is handed over on the LTE side, only the measurement report from the LTE side bearer will be transmitted by the LTE source base station, while the measurement report from the NR side bearer will not be transmitted. This would lead to an increase in the duration for measurement of the NR side after the handover of the networking is performed, or leads to a mistake in the determination of the opportunity to direct the UE to transition to the idle state, by the LTE side.

Publication entitled "3rd Generation Partnership Project; Technical Specification Group Radio Access Network; Evolved Universal Terrestrial Radio Access (E-UTRA) and NR; Multi-connectivity; Stage 2 (Release 16)", 3GPP TS 37.340 V16.1.0, 1 March 2020 (2020-03-01), provides an overview of the multi-connectivity operation using E-UTRA and NR radio access technologies.

Publication by NOKIA, entitle "Inactivity timer for eDRX" (3GPP DRAFT; S2-161600_CR23401 INACTIVITY TIMER FOR EDRX_ V1, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX), discloses that "For a UE for which eDRX has been enabled, if the MME is aware that some signalling or data is pending in the network for that UE (e.g. pending MT SMS at the SMS Service Center, or an application has subscribed to UE reachability). the MME should include a "minimum user inactivity time"" in the next Initial Context Setup Request message towards the eNB. The eNB shall not release the RRC connection due to user inactivity before expiration of the "minimum user inactivity time" (the RRC connection may be released before that expiration for other causes such as Radio Connection With UE Lost).

For the cases when the UE is handed over to another eNB shortly after the UE-CN connectivity is established, the "minimum user inactivity timer" should also be sent in the Handover Request message.

With this solution, the user inactivity period may be extended only for the scenarios where there is pending MT signalling or data for a UE. In all other scenarios (e.g. MO signalling w/o pending MT signalling), there won't be any change, i.e. the existing user inactivity timer is used."

While the above patent applications may achieve their intended purposes, there is still a need for a new and improved method and device for controlling state transition.

### SUMMARY

There is provided a method and a device for controlling state transition, an electronic apparatus, and a storage medium in various embodiments of the present disclosure.

An embodiment of the present disclosure provides a method for controlling state transition of a User Equipment, UE, having an NR side bearer, and an LTE side bearer, performed by a source base station of a Non-Standalone, NSA, networking, comprising, acquiring NR measurement information from the NR side bearer, in response to a determination that a handover of the UE from the source base station of the NSA networking to a target base station of another networking is being performed; determining a waiting duration based on LTE measurement information from the LTE side bearer, and the NR measurement information; and sending the waiting duration to the target base station to enable the target base station to control the UE to transition to an idle state based on the waiting duration after the handover; where the NR measurement information is indicative of information related to a waiting duration in the NR side bearer of the UE, the waiting duration in the NR side bearer of the UE indicates a remaining time that the UE has to wait before transitioning to the idle state, and the LTE measurement information includes at least one of a state information of the LTE side bearer or the waiting duration that has passed during which the LTE side bearer of the UE has no UE traffic.

An embodiment of the present disclosure provides a method for controlling state transition of a User Equipment UE performed by a target base station, which includes, receiving, from a source base station, a waiting duration and determining a type of the target base station; and controlling the UE to transition to an idle state according to the type of the target base station and the waiting duration after a handover of the UE from a source base station to the target base station; where the waiting duration is determined based on Long-Term Evolution, LTE, measurement information from an LTE side bearer, and New Radio, NR, measurement information; and the waiting duration indicates a time that the UE has to wait before transitioning to the idle state.

An embodiment of the present disclosure provides an electronic apparatus, which includes, at least one processor; and a memory configured to at least one program, which when executed by the processor, causes the processor to carry out any one of the methods for controlling state transition as described above.

An embodiment of the present disclosure provides a storage medium storing a computer program, which when executed by a processor, causes the processor to carry out any one of the methods for controlling state transition as described above.

The above and other aspects of the present disclosure will be further illustrated in the description of the drawings, the detailed description and the claims.

### BRIEF DESCRIPTION OF DRAWINGS

FIG. 1 depicts a flow chart showing a method for controlling state transition according to an embodiment of the present disclosure;
FIG. 2 depicts a schematic diagram showing acquisition of the NR measurement information according to an embodiment of the present disclosure;
FIG. 3 depicts a flow chart showing a method for controlling state transition according to an embodiment of the present disclosure;
FIG. 4 depicts a flow chart showing a method for controlling state transition according to an embodiment of the present disclosure;
FIG. 5 depicts a flow chart showing a method for controlling state transition according to another embodiment of the present disclosure;
FIG. 6 depicts a flow chart showing a method for controlling state transition according to an embodiment of the present disclosure;
FIG. 7 depicts a schematic diagram showing transmission of waiting duration according to an embodiment of the present disclosure;
FIG. 8 depicts a flow chart showing a method for controlling state transition according to an embodiment of the present disclosure;
FIG. 9 depicts a flow chart showing a method for controlling state transition according to an embodiment of the present disclosure;
FIG. 10 depicts a schematic diagram showing a method for controlling state transition according to an embodiment of the present disclosure;
FIG. 11 depicts a schematic diagram showing a method for controlling state transition according to an embodiment of the present disclosure;
FIG. 12 depicts a schematic diagram showing a device for controlling state transition according to an embodiment of the present disclosure;
FIG. 13 depicts a schematic diagram showing a device for controlling state transition according to an embodiment of the present disclosure; and
FIG. 14 depicts a schematic diagram showing an electronic apparatus according to an embodiment of the present disclosure.

### DETAILED DESCRIPTION

Some embodiments of the present disclosure will be described with details below with reference to the accompanying drawings in order to illustrate the purpose, technical scheme and advantages of the present disclosure. It should be noted that the embodiments and the features in the embodiments of the present disclosure can be combined with each other without conflict.

A UE would transition to an idle state in case no uplink traffic or downlink traffic is transmitted via the user plane of the UE within a period of time corresponding to a threshold for remaining duration, inactivitytimer. Under LTE networking, in case that handover is performed to a UE at the time before that the UE is detected to have no traffic within a certain period of time T1, and T1 is less than the inactivitytimer, the threshold for the remaining inactivity timer duration, the source base station of the UE will send the remaining inactivity timer duration T2 of the UE to the target base station, where T2= waiting duration (inactivitytimer)-T1. The UE, after being handed to the target base station, will transition to the idle state when the UE has no traffic within T2. Under NSA (non-standalone) networking, the primary node that serves a UE is an LTE node, and the secondary node is an NR node, and the bear of the UE is distributed on both LTE side and NR side. The LTE side and NR side respectively measure the waiting duration during which the UE has no traffic, and allow the UE to transition to the idle state. When handover of the networking is being performed, the LTE bearer only carries the remaining inactivity timer duration of the source LTE side, without considering the inactive duration of the secondary node, which leads to an increase of the duration for measurement of the NR side after the handover of the networking is performed, or leads to a mistake in determination of the opportunity to direct the UE to transition to the idle state, by the LTE side. The followings are the reasons for the above problems.

Reason 1, please consider the following circumstance, when the LTE bearer of UE has no traffic within a certain period T1, and T1 is less than the threshold for remaining inactivity timer duration, inactivitytimer after which the UE transition to the idle state, and the NR bearer has no traffic within a certain period T2, and T2 is also less than the threshold for remaining inactivity timer duration, inactivitytimer after which the UE transition to the idle state, and the handover of the UE from an NSA network to another NSA network happens at this moment. Under such circumstance, after the handover, the UE is considered to be in the inactive state, if T3 of the LTE side bearer meets T3=inactivitytimer-T1. However, the NR side bearer has to detect the threshold for remaining inactivity timer duration before the UE is considered to be in the inactive state, which leads to the increase of the time for the UE to transition to the idle state in such handover.

Reason 2, please consider the following circumstance, when the LTE bearer of the UE has no traffic within a period corresponding to the threshold for remaining inactivity timer duration, inactivitytimer, and the NR side bearer has no traffic within a certain period of time T2, and T2 is less than the threshold for remaining inactivity timer duration, inactivitytimer, or the NR side bearer has no traffic yet, and the handover of the UE from an NSA network to an LTE network happens at this moment. Under such circumstance, After the handover, the target LTE station determines whether the remaining inactivity timer duration is 0, and if so, the target LTE station will directly allow the UE to transition to the idle state. However, in fact, the NR side bearer does not meet the condition for the inactive state, which leads to a mistake in determining the opportunity to allow the UE to transition to the idle state, by the LTE side.

According to various embodiments of the present disclosure, by the transmission of the waiting duration of the NR side bearer, the timeliness of transition of the UE to the idle state during handover of the NSA networking can be effectively improved, the misjudge of the moment at which the UE is transitioned to the idle state is avoided, the accuracy of UE state transition is enhanced, and the power consumption of UE in the communication is reduced.

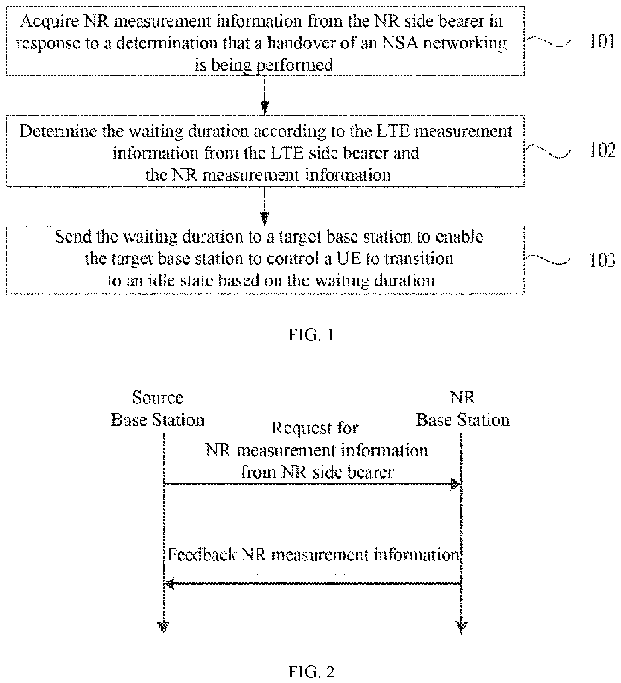

FIG. 1 depicts a flowchart showing a method for controlling state transition according to an embodiment of the present disclosure, which can be applied to the situation of handover of NSA network, and the method can be performed by a device for controlling state transition according to an embodiment of the present disclosure, which may be implemented as software and/or hardware, and the device may be generally integrated into a base station. As shown in FIG. 1, the method for controlling state transition according to an embodiment of the present disclosure includes the following operations.

Operation 101: acquiring NR measurement information from the NR side bearer in response to a determination that a handover of an NSA networking is being performed.

In some embodiments, the handover in the NSA networking may refer to a handover of a UE from a serving base station of an NSA networking to a base station of another NSA networking, or to a base station of another LTE networking. And the NSA networking enables networking through LTE equipment and NR equipment through hybrid networking, in which LTE equipment can be the master node and NR equipment can be the secondary node. The NR measurement information is indicative of the information related to a waiting duration in the NR side bearer of the UE, the waiting duration indicates the time that the UE has to wait before transitioning to the idle state. And the NR measurement information may include the waiting duration during which the UE has no traffic, or description.

In particular, an instruction for measurement may be sent to the NR side bearer of the UE in response to a determination that a handover of an NSA networking is performed. The NR side bearer, upon receiving the instruction for measurement, may determine the NR measurement information of the current NR side bearer, which may include the waiting duration that has passed during which the NR side bearer has no traffic with the UE and the status information of the current NR side bearer. FIG. 2 depicts a diagram showing the acquisition of the NR measurement information according to an embodiment of the present disclosure. Referring to FIG. 2, the source base station may request NR side bearer measurement information from the NR base station, and the NR base station feeds back the NR side bearer measurement information.

Operation 102: determining the waiting duration according to the LTE measurement information from the LTE side bearer and the NR measurement information.

The LTE measurement information is the waiting duration that has passed during which the LTE side bearer has no UE traffic, and the LTE measurement information includes the state information of the LTE side bearer. Since the master node in NSA networking is the LTE base station and the secondary node is the NR base station, the LTE measurement information of the LTE side bearer can be directly acquired from the source base station. The waiting duration may be the remaining time that will pass before the NR side directs the UE to transition to the idle state after handover of the NSA networking.

In some embodiments of the present disclosure, the time period for the UE to transition to the idle state based on NR side bearer can be determined by LTE measurement information form the LTE side bearer and the NR detection measurement from NR side bearer. In some embodiments, respective remaining time can be determined by the NR measurement information and LTE measurement information, and sent as waiting duration respectively. Alternatively, the respective remaining waiting duration can be determined by NR measurement information and LTE measurement information respectively, for example, and one waiting duration may be determined based on the two remaining waiting duration and sent. For example, the larger one in the waiting duration in LTE measurement information and the NR measurement information can be determined as the waiting duration to be sent, by comparison.

Operation 103: sending the waiting duration to a target base station to enable the target base station to control a UE to transition to an idle state based on the waiting duration.

The target base station may be the serving base station of the UE after the handover of the NSA networking, an LTE base station, or an NR base station. The networking may be NSA networking or LTE networking, which depends on the NSA networking of the target base station.

In some embodiments, the waiting duration may be sent from the source base station to the target base station, so that the corresponding bearer in the target base station controls the UE to transition to the idle state based on the waiting duration. As the waiting duration is less than the threshold for the remaining time, the waiting duration for the state transition of the UE after the handover of the NSA networking can be thus reduced. In some embodiments of the present disclosure, the waiting duration can be sent through a dedicated established request message, or the waiting duration can be added to an existing request message and sent.

According to this embodiment of the present disclosure, the NR measurement information is acquired from the NR side bearer in response to a determination that a handover of the NSA networking is performed, the waiting duration is determined based on the LTE measurement information from the LTE side bearer, and NR measurement information, and the waiting duration is sent to the target base station. Thereby, the target base station is enabled to control the UE to transition to the idle state based on the waiting duration. The waiting duration of bearer equipment is shortened during handover of networking, the accuracy of the transition of UE state is improved, and the power consumption in wireless communication can be reduced.

In some embodiments, the NR measurement information includes at least one of, state information, or remaining duration that will pass before state transition of the UE.

In some embodiments, the state information may indicate the state of NR side bearer, including the state of active, inactive, noninactive or the like. When a UE has no uplink or downlink traffic within a threshold for a remaining time, inactivitytimer, the state of NR side bearer can be inactive. When a UE has uplink or downlink traffic, the state NR side bearer can be active. And when the UE has no uplink or downlink traffic within a certain time T, but T is less than the threshold for remaining time, inactivitytimer, the state of NR side bearer can be noninactive. The remaining duration that will pass before state transition of the UE may be the period of time that the NR side bearer has to wait (i.e., during that period of time the NR side bearer has no traffic) before the UE transitions to the idle state. The NR measurement information may include state information and the remaining duration that will pass before state transition of the UE. It can be understood that the LTE measurement information may also include at least one of, state information, or remaining duration that will pass before state transition of the UE.

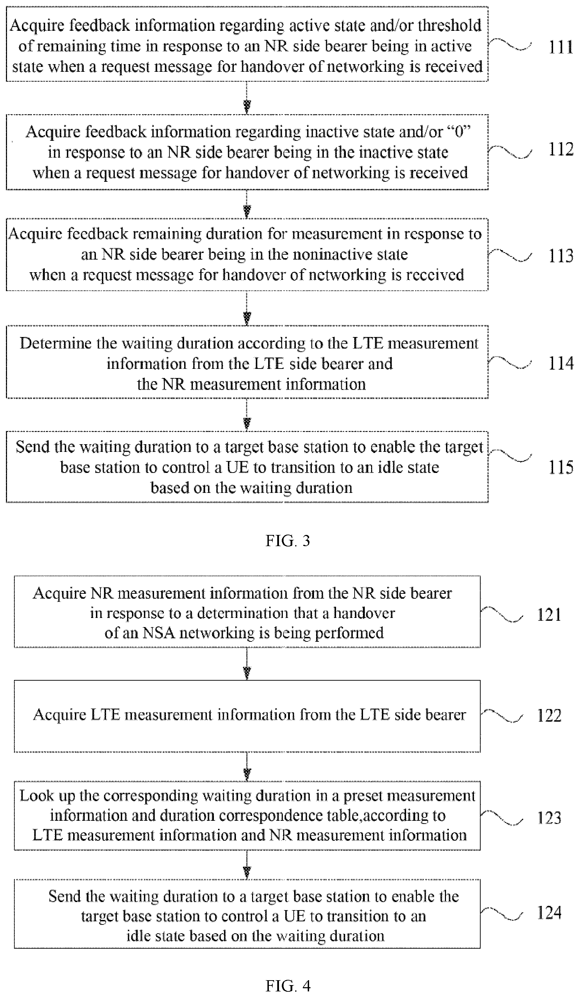

FIG. 3 depicts a flowchart showing a method for controlling state transition according to an embodiment of the present disclosure, which can be applied to the situation of handover of NSA network, and the method can be performed by a device for controlling state transition according to an embodiment of the present disclosure, which may be implemented as software and/or hardware, and the device may be generally integrated into a base station. As shown in FIG. 3, and method for controlling state transition according to an embodiment of the present disclosure includes the following operations.

Operation **111:** acquiring feedback information regarding active state and/or a threshold of remaining time in response to an NR side bearer being in the active state when a request message for handover of networking is received.

The information regarding active state may be indicative of information regarding that the NR side bearer is in the active state, which may be an identifier, and may be composed of numbers, letters and/or special symbols. The threshold for remaining time may be the longest time that NR side bearer has to wait before the UE transitions to idle state. Since the NR side bearer is in the active state, NR side bearer has to wait at least the period of time corresponding to the threshold of the remaining time during which the UE has no traffic.

In some embodiments, the request message for handover of networking may be a request of the UE for handover of the NSA network sent to the source base station, and may include related information of the target base station. It can be determined that the handover of the NSA network is being performed when the request message for handover of networking is acquired. In that case, a request message may be sent to the NR side bearer to measure the state of the NR side bearer. The NR side bearer can feed back the information regarding active state or the threshold of remaining time to the source base station, when the NR side bearer is in the active state. It can be understood that since the threshold of remaining duration of the source base station is identical with that of the NR side bearer, the threshold of remaining duration can be fed back to the source base station, and the threshold of remaining duration can be acquired at the source base station according to the information regarding active state.

Operation 112: acquiring feedback information regarding inactive state and/or "0" in response to an NR side bearer being in the inactive state when a request message for handover of networking is received.

In particular, when the NR side bearer is in the inactive state, it can be determined that NR side bearer has waited the time corresponding to remaining duration of the inactive time periods, inactivitytimer, during which time the NR side bearer has no traffic of the UE. In that case, the UE is informed to transition to the idle state. In such case, the NR side bearer does not have to wait again after the handover of the NSA networking is performed, and the corresponding waiting duration of the NR side bearer in such case can be 0.

In some embodiments, it can be determined that the handover of the NSA network is performed when the request message for handover of networking is acquired. In that case, a request message may be sent by the source base station to the NR side bearer to measure the state of the NR side bearer. And it can be determined that, NR side bearer does not have to wait again after the handover of the NSA network is performed when the state of the NR side bearer is inactive. In such case, the NR side bearer can feed back the information regarding inactive state or "0" as the waiting duration to the source base station.

Operation 113: acquiring feedback remaining duration for measurement in response to an NR side bearer being in the noninactive state when a request message for handover of networking is received.

In some embodiments, when the NR side bearer is in noninactive state, the NR side bearer waits for a certain time T1 during which NR side bearer has no traffic of the UE, but the waiting duration that has passed does not exceed the remaining duration of the inactive time periods, inactivitytimer. Once the handover of the NSA networking is completed, the NR side bearer still has to wait for a period of time T2 during which NR side bearer has no traffic of the UE. It can be understood that T2 can be the difference between the remaining duration of the inactive time periods, inactivitytimer and T1, and T2 can be utilized as the remaining duration for measurement of the NR side bearer. According to some embodiments of the present disclosure, the source base station, once receives the request message for handover of networking, can send a request for measurement to the NR side bearer. And the NR side bearer can determine the inactive time of the UE that the NR side bearer has been waited for according to the request for measurement. If the period of time that NR side bearer has been waited for does not exceed the threshold of the waiting duration, inactivitytimer, the remaining duration for measurement, T2 of the NR side bearer that the NR side bearer still has to wait for, is fed back.

Operation 114: determining the waiting duration according to the LTE measurement information from the LTE side bearer and the NR measurement information.

Operation 115: sending the waiting duration to a target base station to enable the target base station to control a UE to transition to an idle state based on the waiting duration.

According to this embodiment of the present disclosure, different waiting durations are acquired according to different states of the NR side bearer in response to a determination that the handover of the NSA networking is being performed. The waiting duration is sent to the target base station to enable the target base station to transition the UE to the idle state according to the waiting duration. Thereby, it is possible for the NR side bearer to acquire the accurate waiting duration, thus improving the timeliness of transition of the UE to the idle state, reducing the power consumption in the communication, and improving the accuracy of the determination in the opportunity for UE state transition.

FIG. 4 depicts a flowchart showing a method for controlling state transition according to another embodiment of the present disclosure, which can be applied to the situation of handover of NSA network, and the method can be performed by a device for controlling state transition according to an embodiment of the present disclosure, which may be implemented as software and/or hardware, and the device may be generally integrated into a base station. As shown in FIG. 4, and method for controlling state transition according to an embodiment of the present disclosure includes the following operations.

Operation 121: acquiring NR measurement information from the NR side bearer in response to a determination that a handover of an NSA networking is being performed.

Operation 122: acquiring LTE measurement information from the LTE side bearer.

In some embodiments, in NSA networking, the LTE node can be the master node, and the NR node can be the secondary node. The LTE side bearer can be the source base station in the present disclosure, and the corresponding source base station can be the LTE base station, and the LTE measurement information can be acquired locally from the source base station. The LTE measurement information can indicate the length of time that the LTE base station has to wait before directing the UE to transition to the idle state, which can be the waiting duration or the status information indicating the waiting duration. Furthermore, the LTE measurement information may include at least one of, state information, or remaining duration that will pass before state transition of the UE.

Operation 123: looking up the corresponding waiting duration in a preset measurement information and duration correspondence table, according to the LTE measurement information and the NR measurement information.

The preset measurement information and duration correspondence table may be a table of data that stores the corresponding relationship between measurement information and waiting duration. The LTE measurement information and NR measurement information can be stored in association with the waiting duration in the preset measurement information and duration correspondence table. And different LTE measurement information and NR measurement information may correspond to different waiting duration. The corresponding relationship between waiting duration and measurement information may be set by experiment or experience.

In some embodiments, the length of inactive time of the UE (the UE has no traffic during that time) that the NR side bearer has to wait after networking switching can be found in the preset measurement information and duration correspondence table through LTE measurement information and NR measurement information.

Operation 124: sending the waiting duration to a target base station to enable the target base station to control a UE to transition to an idle state based on the waiting duration.

According to this embodiment of the present disclosure, different waiting durations are acquired according to the NR measurement information and the LTE measurement information, in response to a determination that the handover of the NSA networking is being performed. The waiting duration is sent to the target base station to enable the target base station to transition the UE to the idle state according to the waiting duration. Thereby, it is possible for the NR side bearer to acquire the accurate waiting duration, thus improving the timeliness of transition of the UE to the idle state, reducing the power consumption in the communication, and improving the accuracy of the determination in the opportunity for UE state transition.

Further, based on the above embodiment of the present disclosure, the corresponding relationship among LTE measurement information, NR measurement information and waiting duration in the preset measurement information and duration correspondence table includes the following.

If the state information in LTE measurement information or NR measurement information is the information regarding active state, the corresponding waiting duration is the threshold of remaining time. If the state information in LTE measurement information is information regarding inactive state and the state information in NR measurement information is information regarding noninactive state, the corresponding waiting duration is the remaining duration for measurement in NR measurement information. If the state information in the LTE measurement information is information regarding noninactive state and the state information in the NR measurement information is information regarding inactive state, the corresponding waiting duration is the remaining duration for measurement in the LTE measurement information. And, if the state information in LTE measurement information is information regarding noninactive state and the state information in NR measurement information is information regarding noninactive state, the corresponding waiting duration is the larger one of the remaining durations for measurement of the LTE measurement information and NR measurement information.

In particular, in order to further reduce the waiting duration of the NR side equipment, the corresponding relationship among LTE measurement information, NR measurement information and waiting duration in the preset measurement information and duration correspondence table can be set as follows. If both LTE and NR side bearers are in noninactive state, the larger value of the remaining duration for measurement of both side bearers will be taken as the waiting duration and sent to the target LTE station. If one of LTE side bearer and NR side bearer is in inactive state and the other is in noninactive state, the remaining duration for measurement of the bearer that is in noninactive state is sent to the target LTE station. If one of the LTE and NR side bearers is in the active state, the remaining duration for measurement is not sent, or the threshold of the remaining time is sent as inacitvetimer. The preset measurement information and duration correspondence table is shown below by way of example.

Example of the preset measurement information and duration correspondence table

| State of LTE side bearer and duration | State of NR side bearer and duration | Duration that the source LTE base station sent to the target LTE base station |
|---|---|---|
| Acitve | null | null or inactivitytimer |
| null | Active | null or inactivitytimer |
| Inactive | noninactive (T2_{NR}) | T2_{NR} |
| noninactive (T2_{LTE}) | Inactive | T2_{LTE} |
| noninactive (T2_{LTE}) | noninactive (T2_{NR}) | Max (T2_{LTE}, T2_{NR}) |

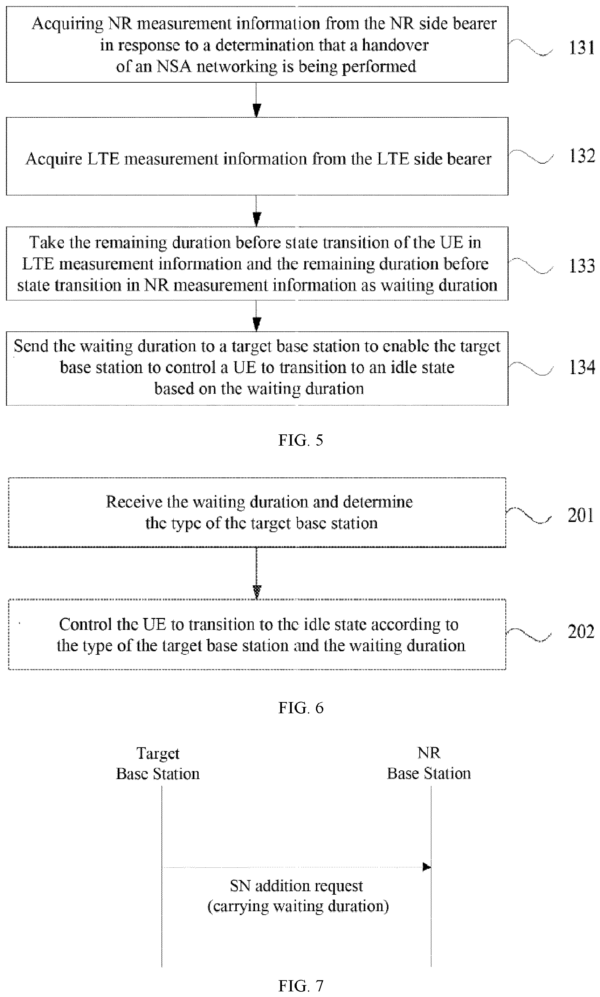

FIG. 5 depicts a flowchart showing a method for controlling state transition according to yet another embodiment of the present disclosure, which can be applied to the situation of handover of NSA network, and the method can be performed by a device for controlling state transition according to an embodiment of the present disclosure, which may be implemented as software and/or hardware, and the device may be generally integrated into a base station. As shown in FIG. 5, the method for controlling state transition according to an embodiment of the present disclosure includes the following operations.

Operation 131: acquiring NR measurement information from the NR side bearer in response to a determination that a handover of an NSA networking is being performed.

Operation 132: acquiring LTE measurement information from the LTE side bearer.

In some embodiments, in NSA networking, the LTE node can be the master node, and the NR node can be the secondary node. The LTE side bearer can be the source base station in the present disclosure, and the corresponding source base station can be the LTE base station, and the LTE measurement information can be acquired locally from the source base station. The LTE measurement information can indicate the length of time that the LTE base station has to wait before directing the UE to transition to the idle state, which can be the waiting duration or the status information indicating the waiting duration. Furthermore, the LTE measurement information may include at least one of, state information, or remaining duration that will pass before state transition of the UE.

Operation 133: taking the remaining duration before state transition of the UE in the LTE measurement information and the remaining duration before state transition in the NR measurement information as waiting duration.

The remaining time for state transition can be the waiting duration that the LTE side bearer and NR side bearer have to undergo before directing the UE to transition to idle state in case of no traffic of the UE during the waiting duration. It can be understood that the remaining duration may be a period of time that is less than or equal to the threshold of remaining inactivity timer duration, inactivitytimer.

In some embodiments of the present disclosure, the waiting duration may include two pieces of time information, which may be remaining time for state transition in LTE measurement information and remaining time for state transition in NR measurement information, respectively. The remaining waiting duration that the NR side bearer has to undergo and the remaining waiting duration that the LTE side bearer has to undergo can be sent together as the waiting duration. Due to the different states of NR side bearer and LTE side bearer, the corresponding remaining time for state transition can be different.

Operation 134: sending the waiting duration to a target base station to enable the target base station to control a UE to transition to an idle state based on the waiting duration.

In particular, when the waiting duration contains two pieces of information of remaining time for state transition, the remaining time for state transition corresponding to LTE side bearer and NR side bearer can be sent to the target base station respectively. It can be understood that the remaining time for state transition corresponding to LTE side bearer can be sent along with the remaining time for state transition corresponding to NR side bearer, or can be sent independently through a different message from the remaining time for state transition corresponding to NR side bearer, to the target base station.

According to this embodiment of the present disclosure, when the handover of the NSA networking is to be performed, the NR measurement information from the NR side bearer, and the LTE measurement information from the LTE side bearer is acquired. The remaining time before state transition of the NR measurement information and the LTE measurement information is sent as the waiting duration to the target base station. Thereby, the UE is enabled to transition to the idle state accurately, the waiting duration of the base station can be reduced, and the power consumption in the communication can be reduced.

In an embodiment, the sending of the waiting duration to a target base station so that the target base station controls a UE to transition to an idle state based on the waiting duration includes, sending the waiting duration to a target base station, through the request message for handover of networking, so that the target base station controls a UE to transition to an idle state.

The request message for handover of networking can be a request for handover of NSA networking sent by the source base station to the target base station. A handover of the networking is performed once the request message for handover of networking is received such that the UE can be connected to the target base station.

In some embodiments of the present disclosure, the waiting duration can be carried in the request message for handover of networking in order to reduce the communication overhead, and the information transmission of the waiting duration between the source base station and the target base station can be achieved by means of the transmission of the request message for handover of networking.

FIG. 6 depicts a flowchart showing a method for controlling state transition according to yet another embodiment of the present disclosure, which can be applied to the situation of handover of NSA network, and the method can be performed by a device for controlling state transition according to an embodiment of the present disclosure, which may be implemented as software and/or hardware, and the device may be generally integrated into a base station. As shown in FIG. 6, the method for controlling state transition according to an embodiment of the present disclosure includes the following operations.

Operation 201: receiving the waiting duration and determining the type of the target base station.

In particular, the target base station can be the serving base station to which the UE is connected, and provide communication services for the UE, once handover of the NSA network is performed. The target base may be a base station of a different type as compared to the source base station for providing network services in a different manner. For example, the target base station may be a base station that provides LTE services or a base station that provides NR services.

In an embodiment, the type of the target base station at least includes, LTE networking base station, or NSA networking base station.

In various embodiments of the present disclosure, handover can be performed from the source base station in NSA networking to the target base station in LTE networking or to the target base station in NSA networking. Correspondingly, the type of the target base station can at least include, LTE networking base station, or NSA networking base station.

Operation 202: controlling the UE to transition to the idle state according to the type of the target base station and the waiting duration.

In particular, due to the different networking of the target base station, different measures can be taken according to the type of the target base station to transition the UE to the idle state based on the waiting duration. For example, when the target base station is an LTE networking base station, the target base station can control the UE to transition to the idle state after the detected waiting duration has passed in case the UE has no traffic during that time. And when the target base station is an NSA networking base station, the waiting duration can be sent to the NR side bearing. As shown in FIG. 7 which depicts a diagram showing the transmission of the waiting duration according to an embodiment of the present disclosure, the NR side bearing can detect the UE traffic during the waiting duration, and control the UE to transition to the idle state when UE has no traffic during the waiting duration.

According to this embodiment of the present disclosure, the type of the target base station is determined and the waiting duration is received, different control strategies can be determined according to different types of the target base station. The UE is transitioned to the idle state according to the control strategy and the waiting duration. Thereby, the accurate determination of the opportunity in UE state transition is achieved, the waiting duration is reduced, and the power consumption in the communication can be reduced.

In an embodiment, the receiving of the waiting duration includes, receiving the request message for handover of networking sent by the source base station, and extracting the waiting duration from the request message for handover of networking.

The request message for handover of networking can be a request for handover of NSA networking sent by the source base station to the target base station. A handover of the networking is performed once the request message for handover of networking is received such that the UE can be connected to the target base station.

In some embodiments of the present disclosure, the waiting duration can be carried in the request message for handover of networking in order to reduce the communication overhead, and the information transmission of the waiting duration between the source base station and the target base station can be achieved by means of the transmission of the request message for handover of networking. The target base station can receive the request message for handover of networking sent by the source base station, and extract the waiting duration, which can be information in one or several fields in the request message for handover of networking.

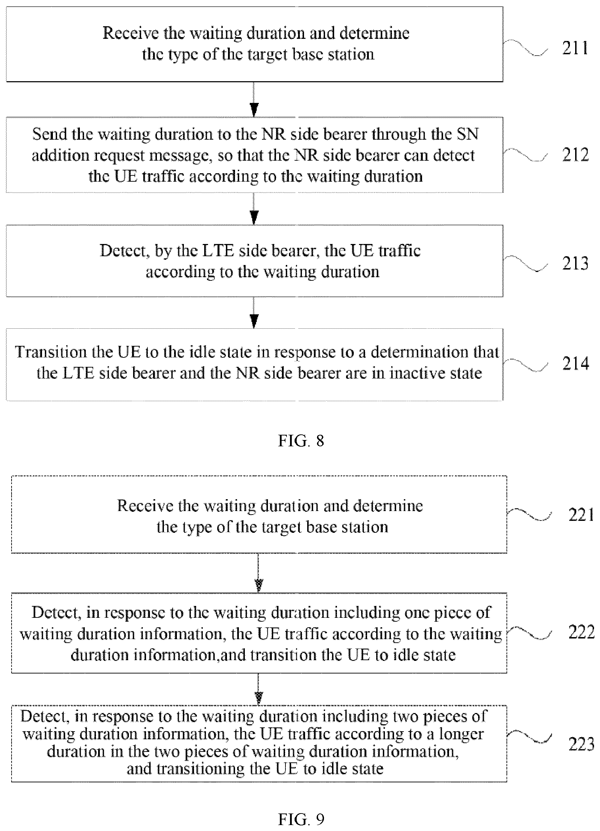

FIG. 8 depicts a flowchart showing a method for controlling state transition according to yet another embodiment of the present disclosure, which can be applied to the situation of handover of NSA network, and the method can be performed by a device for controlling state transition according to an embodiment of the present disclosure, which may be implemented as software and/or hardware, and the device may be generally integrated into a base station. As shown in FIG. 8, the method for controlling state transition according to an embodiment of the present disclosure includes the following operations.

Operation 211: receiving the waiting duration and determining the type of the target base station.

In this embodiment of the present disclosure, the waiting duration sent by the source base station can be received, and the type of the target base station can be determined according to the communication mode. The type of the target base station can be NSA networking base station, which enables the UE to carry out NR communication.

Operation 212: sending the waiting duration to the NR side bearer through the SN addition request message, so that the NR side bearer can detect the UE traffic according to the waiting duration.

In particular, when the target base station is an NSA networking base station, the target base station can transfer the waiting duration to the NR side bearer in various manners, including filling the waiting duration into the SN addition request message and sending the waiting duration to the NR side bearer through the SN addition request message. The NR side bearer can detect the UE traffic according to the corresponding waiting duration to determine whether the UE still has uplink or downlink traffic.

Operation 213: detecting, by the LTE side bearer, the UE traffic according to the waiting duration.

The inactive state can indicate that the NR side has waited for the threshold of the remaining inactivity timer duration, inactivitytimer during which the UE has no traffic, and the UE can be thus informed to transition to the idle state. The inactive state can be composed of numbers, letters and special characters.

In particular, once the handover of the NSA networking is performed, the LTE side bearer can detect the UE traffic according to the received waiting duration, and check whether the UE has no uplink or downlink traffic during the period of time corresponding to the waiting duration. It can be understood that when handover is performed from the NSA networking to the NSA networking, the LTE side bearer can be the target base station, and the UE traffic can be detected directly according to the acquired waiting duration.

Operation 214: transitioning the UE to the idle state in response to a determination that the LTE side bearer and the NR side bearer are in inactive state.

In particular, the state of LTE side bearer and NR side bearer can be determined. When both the LTE side bearer and NR side bearer are in inactive state, it can be determined that the condition that the UE shall transition to the idle state is met both in the LTE side bearer and NR side bearer of NSA networking. In that case, the target base station can send a message to the UE to direct the UE to perform state transition to the idle state. It can be understood that the NR side bearer once enters the inactive state, can send a notify message to inform the LTE side bearer that the NR side bearer is in the inactive state. And it can be determined whether the LTE side bearer is in the inactive state when the notify message is received. A message can be sent to the UE to direct the UE to transition to the idle state if the LTE side bearer is also in the inactive state.

In this embodiment of the present disclosure, the waiting duration is received and the type of the target base station is determined. When the target base station is the type of NSA networking base station, the waiting duration is sent to NR side bearer through an SN addition request message, and NR side bearer detects the UE traffic according to the waiting duration. When it is determined that NR side bearer is in inactive state, the UE traffic is detected through LTE side bearer, and when LTE side bearer is in inactive state, UE is transitioned to the idle state. Thereby, the accurate determination of the opportunity in UE state transition is achieved, the waiting duration is reduced, and the power consumption in the communication can be reduced.

In an embodiment, the sending of the waiting duration to the NR side bearer through the SN addition request message includes the following operations.

When the waiting duration includes one piece of waiting duration information, the waiting duration information is added to an SN addition request message, and the SN addition request message is sent to NR side bearing. When the waiting duration includes two pieces of waiting duration information, the waiting duration information corresponding to the NR side bearer is added to the SN addition request message, and the SN addition request message is sent to the NR side bearer.

In particular, when the target base station is an NSA networking base station, the waiting duration information received by the target base station may be one piece of waiting duration information or two pieces of waiting duration information. The target base station, if acquires one piece of remaining time information from the request message for handover from the source base station, will carry the remaining time information in the SN addition request message and send the message to the NR side. Alternatively, the target base station, if acquires two pieces of remaining time information from the source LTE base station, will carry the remaining time information corresponding to the NR side in the SN addition request message, and send the message to the NR side. The waiting duration can be the information in one or more fields in the SN addition request message.

FIG. 9 depicts a flowchart showing a method for controlling state transition according to another embodiment of the present disclosure, which can be applied to the situation of handover of NSA network, and the method can be performed by a device for controlling state transition according to an embodiment of the present disclosure, which may be implemented as software and/or hardware, and the device may be generally integrated into a base station. As shown in FIG. 9, and the method for controlling state transition according to an embodiment of the present disclosure includes the following operations.

Operation 221: receiving the waiting duration and determining the type of the target base station.

In particular, the waiting duration sent by the source base station can be received, and the type of the target base station can be determined according to the communication mode. The target base station can be the type of LTE networking base station, which enables the UE to carry out LTE communication.

Operation 222: detecting, in response to the waiting duration including one piece of waiting duration information, the UE traffic according to the waiting duration information, and transitioning the UE to the idle state.

In this embodiment of the present disclosure, if the waiting duration received by the target base station from the source base station includes one piece of waiting duration information, where the waiting duration information can be a certain period of time, then the target base station can detect the UE traffic during the period of time corresponding to the waiting duration information. And the UE is transitioned to the idle state when it is determined that no traffic of the UE is detected during that period of time.

Operation 223: detecting, in response to the waiting duration including two pieces of waiting duration information, the UE traffic according to a longer duration in the two pieces of waiting duration information, and transitioning the UE to the idle state.

According to this embodiment of the present disclosure, if the waiting duration received by the target base station from the source base station includes one piece of waiting duration information, where the waiting duration information can be a certain period of time, The waiting duration information with longer duration can be selected from the two pieces of waiting duration information as the duration for detecting the UE traffic, so as to ensure that the UE transitions to the idle state in an accurate moment and prevent the target base station from misjudging the moment at which the UE is controlled to transition to the idle state. The target base station detects the UE traffic during the period of time corresponding to the waiting duration information. And the UE is transitioned to the idle state when it is determined that no traffic of the UE is detected during that period of time.

In this embodiment of the present disclosure, the waiting duration is received and the type of the target base station is determined. When the target base station is the type of an LTE networking base station, an appropriate waiting duration is selected for UE traffic detection, and the UE is transitioned to the idle state. Thereby, the accurate determination of the opportunity for UE state transition is achieved, the target base station is prevented from misjudging the moment at which the UE is controlled to transition to the idle state, the timeliness in response of communication equipment is improved, and the user experience is enhanced.

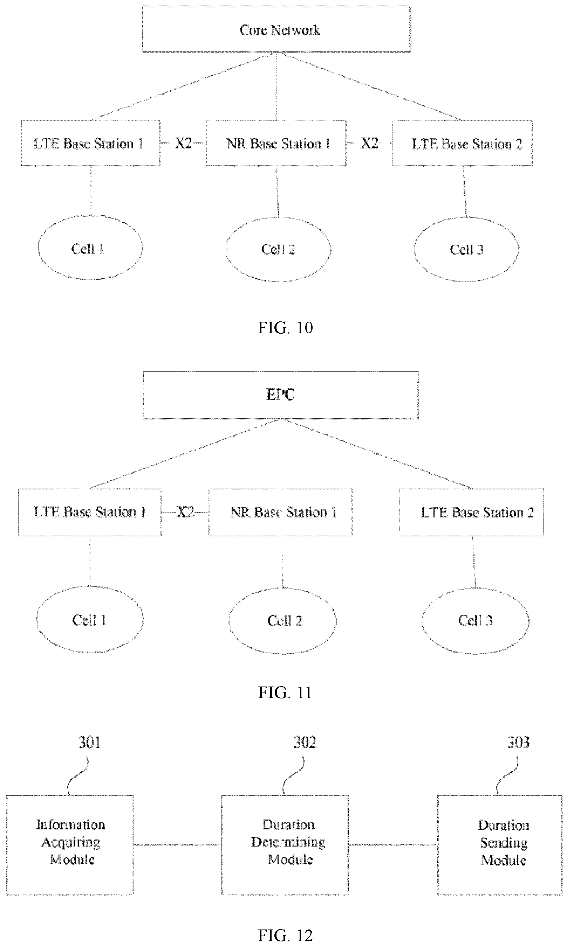

FIG. 10 depicts a schematic diagram showing a method for controlling state transition according to an embodiment of the present disclosure. As shown in FIG. 10, in one embodiment, a handover from NSA networking to NSA networking is performed, and the LTE base station sends one piece of duration information to the target base station. The inactivetytimer is set to 10 min.
1. A UE initially accesses cell 1, in which cell 1 serves as the primary node and cell 2 serves as the secondary node. The UE has bearer and traffic in both cell 1 and cell 2.
2. The traffic of the UE is terminated in cell 1 at a moment, after 3 min, the traffic of the UE in cell 2 is terminated, and after 2 min the UE is handed from cell1 to cell 3.
3. LTE base station 1 acquires the NR side bearer measurement information of the UE from the NR base station 1, and the remaining duration carried in the measurement information returned by the NR base station 1 to the LTE base station 1 is 8 min.
4. LTE base station 1 calculates that the remaining duration of LTE side bearer is 5 min, which duration is compared with 8 min, and 8 min is taken as being a bigger one. LTE base station 1 hands the UE to LTE base station 2, and sends a request for handover carrying the remaining duration of 8 min to LTE base station 2.
5. Once the UE is handed to cell 3, cell 3 is the primary node and cell 2 is the secondary node. LTE base station 2 informs the NR base station 1 with the SN addition request message that the remaining duration is 8 min.
6. After 8 min, NR base station 1 informs LTE base station 2 that NR side bearer is the inactive state, and LTE base station 2 also detects that the LTE side bearer is in the inactive state, and UE is informed to transition to idle state.

Another embodiment is shown in FIG. 11, which depicts a schematic diagram showing a method for controlling state transition according to an embodiment of the present disclosure. As shown in FIG. 11, a handover from NSA networking to LTE networking is performed, the LTE base station sends one piece of duration information to the target base station. The inactivetytimer is set to 10 min.
1. A UE initially accesses cell 1, in which cell 1 serves as the primary node and cell 2 serves as the secondary node. The UE has bearer and traffic in both cell 1 and cell 2.
2. The traffic of the UE is terminated in cell 1 at a moment, after 3 min, the traffic of the UE in cell 2 is terminated, and after 2 min the UE is handed from cell1 to cell 3.
3. LTE base station 1 acquires the NR side bearer measurement information of the UE from the NR base station 1, and the remaining duration carried in the measurement information returned by the NR base station 1 to the LTE base station 1 is 8 min.
4. LTE base station 1 calculates that the remaining duration of LTE side bearer is 5 min, which duration is compared with 8 min, and 8 min is taken as being a bigger one. LTE base station 1 hands the UE to LTE base station 2, and sends a request for handover carrying the remaining duration of 8 min to LTE base station 2.
5. The UE is handed to cell 3, LTE base station 2 detects the traffic of the UE according to 8 min, and notifies the UE to transition to the idle state after 8 min.

Returning to FIG. 10, a method for controlling state transition according to another embodiment of the present disclosure will be described, in which a handover from NSA networking to NSA networking is performed, and the LTE base station sends two pieces of duration information to the target base station. The inactivetytimer is set to 10 min.
1. A UE initially accesses cell 1, in which cell 1 serves as the primary node and cell 2 serves as the secondary node. The UE has bearer and traffic in both cell 1 and cell 2.
2. The traffic of the UE is terminated in cell 1 at a moment, after 10 min, the traffic of the UE in cell 2 is terminated, and after 2 min the UE is handed from cell1 to cell 3.
3. LTE base station 1 acquires the NR side bearer measurement information of the UE from the NR base station 1, and the remaining duration carried in the measurement information returned by the NR base station 1 to the LTE base station 1 is 8 min.
4. The remaining duration of 0 min on LTE side and 8 min on NR side is carried in the request for handover sent from LTE base station 1 to LTE base station 2.
5. Once the UE is handed to cell 3, cell 3 is the primary node and cell 2 is the secondary node. LTE base station 2 informs the NR base station 1 with the SN addition request message that the remaining duration is 8min. LTE base station 2 directly determines that the LTE side bearer is in the inactive state since the remaining duration of the LTE side is 0 min, and then continues to wait for the status notification of the NR base station 1.
6. After 8 min, NR base station 1 notifies LTE base station 2 that the NR bearer is in the inactive state, and LTE base station 2 notifies UE to transition to the idle state.

Returning to FIG. 11, a method for controlling state transition according to another embodiment of the present disclosure will be described, in which a handover from NSA networking to LTE networking is performed, and the LTE base station sends two pieces of duration information to the target base station. The inactivetytimer is set to 10 min.
1. A UE initially accesses cell 1, in which cell 1 serves as the primary node and cell 2 serves as the secondary node. The UE has bearer and traffic in both cell 1 and cell 2.
2. The traffic of the UE is terminated in cell 1 at a moment, after 10 min, the traffic of the UE in cell 2 is terminated, and after 2 min the UE is handed from cell1 to cell 3.
3. LTE base station 1 acquires the NR side bearer measurement information of the UE from the NR base station 1, and the remaining duration carried in the measurement information returned by the NR base station 1 to the LTE base station 1 is 8 min.
4. The remaining duration of 0 min on LTE side and 8 min on NR side is carried in the request for handover sent from LTE base station 1 to LTE base station 2.
5. Once the UE is handed to cell 3, the LTE base station 2 compares the remaining duration of the LTE side bearer, i.e., 0 min and the remaining duration of the NR side bearer, i.e., 8min, and determines that the duration for traffic detection should be 8 min.
6. After 8 min, the LTE base station 2 determines that the NR side bearer is in the inactive state and notifies the UE to transition to the idle state.

FIG. 12 depicts a schematic diagram showing a device for controlling state transition according to an embodiment of the present disclosure, which can execute the method for controlling state transition according to any one of the embodiments of the present disclosure. The device includes corresponding functional modules for performing the method and can achieve corresponding beneficial effects. The device can be implemented as software and/or hardware, and includes an information acquiring module 301, a duration determining module 302 and a duration sending module 303.

The information acquiring module 301 is configured to acquire NR measurement information from the NR side bearer in response to a determination that a handover of an NSA networking is being performed.

The duration determining module 302 is configured to determine a waiting duration according to the LTE measurement information from the LTE side bearer and the NR measurement information.

The duration sending module 303 is configured to send the waiting duration to a target base station so that the target base station controls a UE to transition to an idle state.

According to this embodiment of the present disclosure, the NR measurement information from the NR side bearer is acquired by the information acquiring module in response to a determination that a handover of the NSA networking is being performed, the waiting duration is determined by the duration determining module based on the LTE measurement information from the LTE side bearer, and the NR measurement information, and the waiting duration is sent to the target base station by the duration sending module. Thereby, the target base station is enabled to control the UE to transition to the idle state based on the waiting duration. The waiting duration of bearer equipment is shortened during handover of networking, the accuracy of the transition of UE state is improved, and the power consumption in wireless communication can be reduced.

In an embodiment, the NR measurement information in the device for controlling state transition includes at least one of, state information, or remaining duration that will pass before state transition of the UE.

In an embodiment, the information acquiring module 301 includes a first acquiring unit, a second acquiring unit and a third acquiring unit.

The first acquiring unit is configured to acquire feedback information regarding active state and/or a threshold of remaining duration in response to an NR side bearer being in the active state when a request message for handover of networking is received.

The second acquiring unit is configured to acquire feedback information regarding inactive state and/or "0" in response to an NR side bearer being in the inactive state when a request message for handover of networking is received.

The third acquiring unit is configured to acquire feedback remaining duration for measurement in response to an NR side bearer being in the noninactive state when a request message for handover of networking is received.

In an embodiment, the duration determining module 302 includes a measurement information unit and a duration determination unit.

The measurement information unit is configured to acquire LTE measurement information of an LTE side bearer.

The duration determination unit is configured to look up corresponding waiting duration in a preset measurement information and duration correspondence table, according to the LTE measurement information and the NR measurement information.

In an embodiment, in the duration determining module 302, the corresponding relationship among LTE measurement information, NR measurement information and waiting duration in the preset measurement information and duration correspondence table includes the following.

If the state information in LTE measurement information or NR measurement information is the information regarding active state, the corresponding waiting duration is the threshold of remaining time. If the state information in LTE measurement information is information regarding inactive state and the state information in NR measurement information is information regarding noninactive state, the corresponding waiting duration is the remaining duration for measurement in NR measurement information. If the state information in the LTE measurement information is information regarding noninactive state and the state information in the NR measurement information is information regarding inactive state, the corresponding waiting duration is the remaining duration for measurement in the LTE measurement information. And, if the state information in LTE measurement information is information regarding noninactive state and the state information in NR measurement information is information regarding noninactive state, the corresponding waiting duration is the larger one of the remaining durations for measurement of the LTE measurement information and NR measurement information.

In an embodiment, the duration determining module 302 further includes an LTE information unit, and a second duration unit.

The LTE information unit is configured to acquire LTE measurement information of the LTE side bearer.

The second duration unit is configured to take the remaining duration before state transition of the UE in the LTE measurement information and the remaining duration before state transition in the NR measurement information as waiting duration.

In an embodiment, the duration sending module 303 includes a sending execution unit.

The sending execution unit is configured to send the waiting duration to a target base station through a request message for handover of networking so that the target base station controls a UE to transition to an idle state.

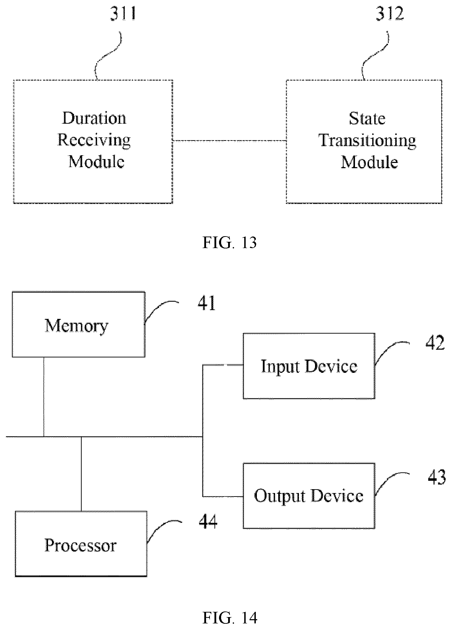

FIG. 13 depicts a schematic diagram showing a device for controlling state transition according to an embodiment of the present disclosure, which can execute the method for controlling state transition according to any one of the embodiments of the present disclosure. The device includes corresponding functional modules for performing the method and can achieve corresponding beneficial effects. The device can be implemented as software and/or hardware, and includes a duration receiving module 311, and a state transitioning module 312.

The duration receiving module 311 is configured to receive the waiting duration and determine the type of the target base station.

The state transitioning module 312 is configured to control the UE to transition to the idle state according to the type of the target base station and the waiting duration.

According to this embodiment of the present disclosure, the type of the target base station is determined and the waiting duration is received by the duration receiving module, different control strategies can be determined according to different types of the target base station. The UE is transitioned to the idle state according to the control strategy and the waiting duration by the state transitioning module. Thereby, the accurate determination of the opportunity in UE state transition is achieved, the waiting duration is reduced, and the power consumption in the communication can be reduced.

In an embodiment, in the device for controlling state transition, the type of the target base station at least includes, LTE networking base station, or NSA networking base station.

In an embodiment, the duration receiving module 311 includes a request message unit.

The request message unit is configured to receive a request message for handover of networking sent by the source base station, and to extract the waiting duration from the request message for handover of networking.

In an embodiment, the state transitioning module 312 includes an NR transfer unit, and LTE detection unit, and an idle state transition unit.

The NR transfer unit is configured to send the waiting duration to the NR side bearer through an SN addition request message, so that the NR side bearer can detect the UE traffic according to the waiting duration.

The LTE detection unit is configured to notify the LTE side bearer to detect UE traffic in response to a determination that the NR side bearer is in inactive state.

The idle state transition unit is configured to transition the UE to the idle state in response to a determination that the LTE side bearer and the LTE side bearer are in inactive state.

In an embodiment, the NR transfer unit is further configured to, in response to the waiting duration including one piece of waiting duration information, add the waiting duration information to an SN addition request message, and send the SN addition request message to NR side bearing; and in response to the waiting duration including two pieces of waiting duration information, to add the waiting duration information corresponding to the NR side bearer to the SN addition request message, and to send the SN addition request message to the NR side bearer.

In an embodiment, the state transitioning module 312 further includes a first LTE unit and a second LTE unit.

The first LTE unit is configured to, detect, in response to the waiting duration including one piece of waiting duration information, the UE traffic according to the waiting duration information, and to transition the UE to idle state.

The second LTE unit is configured to, detect, in response to the waiting duration including two pieces of waiting duration information, the UE traffic according to a longer duration in the two pieces of waiting duration information, and to transition the UE to idle state.

FIG. 14 depicts a schematic diagram of an electronic apparatus according to an embodiment of the present disclosure. As shown in FIG. 14, the apparatus includes a processor 40, a memory 41, an input device 42, and an output device 43. There may be provided one or more processors 40 in the apparatus, and FIG. 14 shows one processor 40by way of an example. The processor 40, the memory 41, the input device 42, and the output device 43 can be connected by a bus or the like, and bus connection is shown by way of an example in FIG. 14.

As a computer-readable storage medium, the memory 41 can be configured to store software programs, computer-executable programs, and modules, such as the modules corresponding to the device for controlling state transition according to various embodiments of the present disclosure (the information acquiring module 301, the duration determining module 302, the duration sending module 303, the duration receiving module 311, and/or the state transitioning module 312). The processor 40 executes various functional applications and data processing of the apparatus by running software programs, instructions and modules stored in the memory 41, so as to carry out any one of the methods for controlling state transition as described above.

The memory 41 can substantially include a storage program area and a storage data area, in which the storage program area can store an operating system and application programs required by at least one function. The storage data area can store data created according to the use of the terminal device. In addition, the memory 41 may include a high-speed random-access memory and a non-volatile memory, such as at least one disk memory device, a flash memory device, or other non-volatile solid-state memory devices. In some examples, the memory 41 may further include memories remotely located with respect to the processor 40, and these remote memories may be connected to devices through a network. Examples of the above networks include, but are not limited to, Internet, intranet, local area network, mobile communication network, and combinations thereof.

The input device 42 may be configured to receive input digital or character information and generate key signal input related to user settings and function control of the apparatus. The output device 43 may include a display device such as a display.

An embodiment of the present disclosure further provides a storage medium containing computer-executable instructions, which, when executed by a computer processor, causes the processor to carry out a method for controlling state transition, the method includes the following operations:
Acquiring NR measurement information from an NR side bearer, in response to a determination that a handover of an NSA networking is being performed; determining a waiting duration based on LTE measurement information from an LTE side bearer, and the NR measurement information; and sending the waiting duration to a target base station to enable the target base station to control a UE to transition to an idle state based on the waiting duration.

Additionally or alternatively, the method includes, receiving a waiting duration and determining a type of the target base station; and controlling a UE to transition to an idle state according to the type of the target base station and the waiting duration.

It is apparent that the storage medium according to this embodiment of the present disclosure contains computer-executable instructions, and the computer-executable instructions are not limited to the above-mentioned operations of the method, and can also perform related operations in the method for controlling state transition according to any one of the embodiments of the present disclosure.

According to various embodiments of the present disclosure, the NR measurement information is acquired from the NR side bearer in response to a determination that a handover of the NSA networking is performed, the waiting duration is determined based on the LTE measurement information from the LTE side bearer, and NR measurement information, and the waiting duration is sent to the target base station. Thereby, the target base station is enabled to control the UE to transition to the idle state based on the waiting duration. The waiting duration of bearer equipment is shortened during handover of networking, the accuracy of the transition of UE state is improved, and the power consumption in wireless communication can be reduced.

By means of the embodiments set forth in the present disclosure, accurate detection of the UE state is achieved, the average waiting duration for the UE to transition to the idle state is shortened, the accuracy of the transition of UE state is improved, and the power consumption in wireless communication can be reduced.

From the description of the above embodiments, it is apparent to a person having ordinary skills in the art that the method of the above embodiments can be implemented by means of software with necessary general hardware platform, or by hardware, but in many cases, the former is a more common implementation. Based on this understanding, the essential part of the technical solution of the present disclosure or the part that contributes to the prior art can be embodied in the form of a software product, which can be stored in a computer-readable storage medium, such as a floppy disk of a computer, a Read-Only Memory (ROM), a Random Access Memory (RAM), FLASH memory, hard disk or optical disk, etc., in which several instructions are contained to cause a computer device (which may be a personal computer, a server, or a network device, etc.) to carry out the methods described in various embodiments of the present disclosure.

It shall be noted that in the device for controlling state transition as described in above embodiments, the units and modules included are divided according to the functional logic merely, but it is not intended to limit thereto, any suitable division of the units and modules is possible as long as the corresponding functions can be realized. In addition, the specific names of each functional unit are only for convenience for distinguishing from the named one from another, and are not intended to limit the scope of the present disclosure.

Described above are only some embodiments of the present disclosure which are not intended to limit the scope of the present disclosure.

It should be understood by those having ordinary skill in the art that the term user terminal device covers any suitable type of wireless user equipment, such as a mobile phone, a portable data processing device, a portable web browser, or a vehicle-mounted mobile station.

Generally, several embodiments of the present disclosure may be implemented in hardware or dedicated circuits, software, logic or any combination thereof. For example, some aspects may be implemented in hardware, while other aspects may be implemented in firmware or software that can be executed by a controller, microprocessor or other computing device, although the present disclosure is not limited thereto.

Embodiments of the present disclosure can be implemented through a data processor of a mobile device by executing computer program instructions, such as provided in a processor entity, or by hardware, or by a combination of software and hardware. The computer program instructions may be assembly instructions, instruction set architecture (ISA) instructions, machine instructions, machine-related instructions, microcode, firmware instructions, state setting data, or source code or object code written in any combination of one or more programming languages.

The block diagram of any logic flow as shown in the drawings of the present disclosure may illustrate processes or procedures, or interconnected logic circuits, modules and functions, or the combination of processes or procedures and logic circuits, modules and functions. The computer program can be stored in the memory. The memory can be of any type suitable for the local technical environment and can be implemented through any suitable data storage technique, such as but not limited to read only memory (ROM), random access memory (RAM), optical memory devices and systems (digital versatile disk DVD or CD), or the like. Computer-readable media may include non-transitory storage media. The data processor can be any type suitable for the local technical environment, such as but not limited to general-purpose computer, special-purpose computer, microprocessor, digital signal processor (DSP), application specific integrated circuit (ASIC), programmable logic device (FGPA) and processors based on multi-core processor architecture.

Detailed description of some embodiments of the present disclosure is provided above by way of nonlimiting illustration. It is apparent for those having ordinary skill in the art to make various modifications and alternations to the above embodiments without departing from the scope of the present disclosure. Therefore, the proper scope of the present disclosure will be defined by the appended claims.

## Claims

1. A method for controlling state transition of a User Equipment, UE, having an NR side bearer, and an LTE side bearer, performed by a source base station of a Non-Standalone, NSA, networking, comprising,
acquiring New Radio, NR, measurement information from the NR side bearer, in response to a determination that a handover of the UE from the source base station of the NSA networking to a target base station of another networking is being performed (101);
determining a waiting duration based on Long-Term Evolution, LTE, measurement information from the LTE side bearer, and the NR measurement information (102); and
sending the waiting duration to the target base station to enable the target base station to control the UE to transition to an idle state based on the waiting duration (103) after the handover; **characterized in that**,
the NR measurement information is indicative of information related to a waiting duration in the NR side bearer of the UE, the waiting duration in the NR side bearer of the UE indicates a remaining time that the UE has to wait before transitioning to the idle state, and the LTE measurement information includes at least one of a state information of the LTE side bearer or the waiting duration that has passed during which the LTE side bearer of the UE has no UE traffic.

2. The method of claim 1, wherein, the acquiring of NR measurement information from an NR side bearer, in response to a determination that a handover of an NSA networking is being performed, comprises one of,
acquiring feedback information regarding an active state and/or a threshold of remaining duration before state transition, in response to the NR side bearer being in the active state when a request message for handover of networking is received (111);
acquiring feedback information regarding an inactive state and/or "0" in response to the NR side bearer being in the inactive state when a request message for handover of networking is received (112); or
acquiring feedback remaining duration for measurement in response to the NR side bearer being in a noninactive state when a request message for handover of networking is received (113).

3. The method of claim 1, wherein the determining of a waiting duration based on LTE measurement information from an LTE side bearer and the NR measurement information comprises,
acquiring the LTE measurement information from the LTE side bearer (122); and
looking up a waiting duration in a preset measurement information and duration correspondence table, corresponding to the LTE measurement information and the NR measurement information (123).

4. The method of claim 3, wherein the preset measurement information and duration correspondence table comprises correspondence of the LTE measurement information, the NR measurement information and the waiting duration, and the correspondence comprises,
when state information in the LTE measurement information or the NR measurement information is information regarding an active state, the waiting duration is a threshold of remaining duration before state transition;
when state information in the LTE measurement information is information regarding an inactive state, and state information in the NR measurement information is information regarding a noninactive state, the waiting duration is a remaining duration for measurement in the NR measurement information;
when state information in the LTE measurement information is information regarding a noninactive state, and the state information in the NR measurement information is information regarding an inactive state, the waiting duration is a remaining duration for measurement in the LTE measurement information; and
when state information in the LTE measurement information is information regarding a noninactive state, and state information in the NR measurement information is information regarding a noninactive state, the waiting duration is a larger one of the remaining duration for measurement of the LTE measurement information and NR measurement information.

5. The method of claim 1, wherein the determining of a waiting duration based on LTE measurement information from an LTE side bearer and the NR measurement information comprises,
acquiring the LTE measurement information from the LTE side bearer (132); and
taking a remaining duration before state transition in the LTE measurement information and the remaining duration before state transition in the NR measurement information as the waiting duration (133).

6. The method of claim 1, wherein the sending of the waiting duration to a target base station to enable the target base station to control a UE to transition to an idle state based on the waiting duration, comprises,
sending the waiting duration to the target base station through a request message for handover of networking to enable the target base station to control the UE to transition to an idle state.

7. A method for controlling state transition of a User Equipment, UE, performed by a target base station, comprising,
receiving , from a source base station, a waiting duration and determining a type of the target base station (201); and
controlling the UE, to transition to an idle state according to the type of the target base station and the waiting duration (202) after a handover of the UE from the source base station to the target base station; **characterized in that**,
the waiting duration is determined based on Long-Term Evolution, LTE, measurement information from an LTE side bearer, and New Radio, NR, measurement information; and
the waiting duration indicates a time that the UE has to wait before transitioning to the idle state;

8. The method of claim 7, wherein the type of the target base station at least comprises, Long-Term Evolution, LTE, networking base station, or Non-standalone, NSA, networking base station.

9. The method of claim 7, wherein the receiving of the waiting duration comprises,
receiving a request message for handover of networking sent by a source base station, and extracting the waiting duration from the request message for handover of networking.

10. The method of claim 7, wherein the type of the target base station is NSA networking base station, and the controlling of the UE to transition to idle state according to the type of the target base station and the waiting duration comprises,
sending the waiting duration to a New Radio, NR, side bearer through an SN addition request message to enable the NR side bearer to detect traffic of the UE according to the waiting duration (212);
detecting, by an LTE side bearer, traffic of the UE according to the waiting duration (213); and
transitioning the UE to an idle state in response to a determination that both the LTE side bearer and the NR side bearer are in an inactive state (214).

11. The method of claim 10, wherein the sending of the waiting duration to an NR side bearer through an SN addition request message comprises,
in response to the waiting duration comprising one piece of waiting duration information, adding the waiting duration information to the SN addition request message, and sending the SN addition request message to an NR side bearing; and
in response to the waiting duration comprising two pieces of waiting duration information, adding the waiting duration information corresponding to the NR side bearer to the SN addition request message, and sending the SN addition request message to the NR side bearer.

12. The method of claim 7, wherein the type of the target base station is LTE networking base station, and the controlling of the UE to transition to idle state according to the type of the target base station and the waiting duration comprises,
in response to the waiting duration comprising one piece of waiting duration information, detecting traffic of the UE according to the waiting duration information, and controlling the UE to transition to an idle state (222); and
in response to the waiting duration comprising two pieces of waiting duration information, detecting traffic of the UE according to a longer duration in the two pieces of waiting duration information, and controlling the UE to transition to an idle state (223).

13. A base station apparatus, comprising,
at least one processor (44); and
a memory (41) configured to at least one program, which when executed by the processor (44), causes the processor (44) to carry out the method for controlling state transition according to any one of claim 1 to claim 12.

14. A storage medium storing a computer program, which when executed by a processor of a base station, causes the base station to carry out the method for controlling state transition according to any one of claim 1 to claim 12.

## Patentansprüche

1. Verfahren zum Steuern eines Statusübergangs eines Benutzergeräts, UE, mit einem NR-seitigen Träger und einem LTE-seitigen Träger, der durch eine Quellbasisstation eines nicht eigenständigen Netzwerks, NSA-Netzwerks, durchgeführt wird, umfassend:
Erfassen von New-Radio-Messinformationen, NR-Messinformationen, von dem NR-seitigen Träger als Reaktion auf eine Bestimmung, dass eine Übergabe des UE von der Quellbasisstation des NSA-Netzwerks an eine Zielbasisstation eines anderen Netzwerks durchgeführt wird (101);
Bestimmen einer Wartezeitdauer basierend auf Long-Term-Evolution-Messinformationen, LTE-Messinformationen, von dem LTE-seitigen Träger und den NR-Messinformationen (102); und
Senden der Wartezeitdauer an die Zielbasisstation, um es der Zielbasisstation zu ermöglichen, das UE so zu steuern, dass es basierend auf der Wartezeitdauer (103) nach der Übergabe in einen Ruhestatus übergeht; **dadurch gekennzeichnet, dass**
die NR-Messinformationen Informationen angeben, die sich auf eine Wartezeitdauer in dem NR-seitigen Träger des UE beziehen, die Wartezeitdauer in dem NR-seitigen Träger des UE eine verbleibende Zeit angeben, die das UE warten muss, bevor es in den Ruhestatus übergeht, und die LTE-Messinformation mindestens eines von Statusinformationen des LTE-seitigen Trägers oder der Wartezeitdauer, die vergangen ist, während deren der LTE-seitige Träger des UE keinen UE-Verkehr aufweist, enthalten.

2. Verfahren nach Anspruch 1, wobei das Erfassen von NR-Messinformationen von einem NR-seitigen Träger als Reaktion auf eine Bestimmung, dass eine Übergabe eines NSA-Netzwerks durchgeführt wird, eines von Folgenden umfasst:
Erfassen von Rückkopplungsinformationen in Bezug auf einen aktiven Status und/oder einen Schwellenwert der verbleibenden Zeitdauer vor dem Statusübergang als Reaktion darauf, dass sich der NR-seitige Träger in dem aktiven Status befindet, wenn eine Anforderungsnachricht zur Übergabe des Netzwerks empfangen wird (111);
Erfassen von Rückkopplungsinformationen in Bezug auf einen inaktiven Status und/oder "0" als Reaktion darauf, dass sich der NR-seitige Träger in dem inaktiven Status befindet, wenn eine Anforderungsnachricht zur Übergabe des Netzwerks empfangen wird (112); oder
Erfassen einer Rückkopplung zur verbleibenden Zeitdauer für die Messung als Reaktion darauf, dass sich der NR-seitige Träger in einem nicht inaktiven Status befindet, wenn eine Anforderungsnachricht zur Übergabe des Netzwerks empfangen wird (113).

3. Verfahren nach Anspruch 1, wobei das Bestimmen einer Wartezeitdauer basierend auf LTE-Messinformationen von einem LTE-seitigen Träger und den NR-Messinformationen Folgendes umfasst:
Erfassen der LTE-Messinformationen von dem LTE-seitigen Träger (122); und
Nachschlagen einer Wartezeitdauer in einer voreingestellten Messinformationen- und Zeitdauerkorrespondenztabelle entsprechend den LTE-Messinformationen und den NR-Messinformationen (123).

4. Verfahren nach Anspruch 3, wobei die voreingestellte Messinformationen- und Zeitdauerkorrespondenztabelle eine Korrespondenz der LTE-Messinformationen, der NR-Messinformationen und der Wartezeitdauer umfasst und die Korrespondenz Folgendes umfasst:
wenn Statusinformationen in den LTE-Messinformationen oder den NR-Messinformationen Informationen in Bezug auf einen aktiven Status sind, ist die Wartezeitdauer ein Schwellenwert der verbleibenden Zeitdauer vor dem Statusübergang;
wenn Statusinformationen in den LTE-Messinformationen Informationen in Bezug auf einen inaktiven Status sind und Statusinformationen in den NR-Messinformationen Informationen in Bezug auf einen nicht inaktiven Status sind, ist die Wartezeitdauer eine verbleibende Zeitdauer für die Messung in den NR-Messinformationen;
wenn Statusinformationen in den LTE-Messinformationen Informationen in Bezug auf einen nicht inaktiven Status sind und die Statusinformationen in den NR-Messinformationen Informationen in Bezug auf einen inaktiven Status sind, ist die Wartezeitdauer eine verbleibende Zeitdauer für die Messung in den LTE-Messinformationen; und
wenn Statusinformationen in den LTE-Messinformationen Informationen in Bezug auf einen nicht inaktiven Status sind und Statusinformationen in den NR-Messinformationen Informationen in Bezug auf einen nicht inaktiven Status sind, ist die Wartezeitdauer eine größere von der verbleibenden Zeitdauer für die Messung der LTE-Messinformationen und NR-Messinformationen.

5. Verfahren nach Anspruch 1, wobei das Bestimmen einer Wartezeitdauer basierend auf LTE-Messinformationen von einem LTE-seitigen Träger und den NR-Messinformationen Folgendes umfasst:
Erfassen der LTE-Messinformationen von dem LTE-seitigen Träger (132); und
Heranziehen einer verbleibenden Zeitdauer vor dem Statusübergang in den LTE-Messinformationen und der verbleibenden Zeitdauer vor dem Statusübergang in den NR-Messinformationen als die Wartezeitdauer (133).

6. Verfahren nach Anspruch 1, wobei das Senden der Wartezeitdauer an eine Zielbasisstation, um es der Zielbasisstation zu ermöglichen, ein UE so zu steuern, dass es basierend auf der Wartezeitdauer in einen Ruhestatus übergeht, Folgendes umfasst:
Senden der Wartezeitdauer an die Zielbasisstation über eine Anforderungsnachricht zur Übergabe des Netzwerks, um es der Zielbasisstation zu ermöglichen, das UE so zu steuern, dass es in einen Ruhestatus übergeht.

7. Verfahren zum Steuern eines Statusübergangs eines Benutzergeräts, UE, der durch eine Zielbasisstation durchgeführt wird, umfassend:
Empfangen, von einer Quellbasisstation, einer Wartezeitdauer und Bestimmen eines Typs der Zielbasisstation (201); und
Steuern des UE, sodass es gemäß dem Typ der Zielbasisstation und der Wartezeitdauer (202) nach einer Übergabe des UE von der Quellbasisstation an die Zielbasisstation in einen Ruhestatus übergeht; **dadurch gekennzeichnet, dass**:
die Wartezeitdauer basierend auf Long-Term-Evolution-Messinformationen, LTE-Messinformationen, von einem LTE-seitigen Träger und New-Radio-Messinformationen, NR-Messinformationen, bestimmt wird; und
die Wartezeitdauer eine Zeit angibt, die das UE warten muss, bevor es in den Ruhestatus übergeht.

8. Verfahren nach Anspruch 7, wobei der Typ der Zielbasisstation mindestens Long-Term-Evolution-Netzwerkbasisstation, LTE-Netzwerkbasisstation, oder nicht eigenständige Netzwerkbasisstation, NSA-Netzwerkbasisstation, umfasst.

9. Verfahren nach Anspruch 7, wobei das Empfangen der Wartezeitdauer Folgendes umfasst:
Empfangen einer Anforderungsnachricht zur Übergabe des Netzwerks, die durch eine Quellbasisstation gesendet wird, und Extrahieren der Wartezeitdauer aus der Anforderungsnachricht zur Übergabe des Netzwerks.

10. Verfahren nach Anspruch 7, wobei der Typ der Zielbasisstation eine NSA-Netzwerkbasisstation ist und das Steuern des UE, sodass es gemäß dem Typ der Zielbasisstation und der Wartezeitdauer in den Ruhestatus übergeht, Folgendes umfasst:
Senden der Wartezeitdauer an einen New-Radio-seitigen, NR-seitigen, Träger über eine SN-Hinzufügungsanforderungsnachricht, um es dem NR-seitigen Träger zu ermöglichen, Verkehr des UE gemäß der Wartezeitdauer (212) zu erkennen;
Erkennen von Verkehr des UE durch einen LTE-seitigen Träger gemäß der Wartezeitdauer (213); und
Überführen des UE in einen Ruhestatus als Reaktion auf eine Bestimmung, dass sowohl der LTE-seitige Träger als auch der NR-seitige Träger sich in einem inaktiven Status befinden (214).

11. Verfahren nach Anspruch 10, wobei das Senden der Wartezeitdauer an einen NR-seitigen Träger über eine SN-Hinzufügungsanforderungsnachricht Folgendes umfasst:
als Reaktion darauf, dass die Wartezeitdauer eine Wartezeitdauerinformation umfasst, Hinzufügen der Wartezeitdauerinformation zu der SN-Hinzufügungsanforderungsnachricht und Senden der SN-Hinzufügungsanforderungsnachricht an ein NR-seitiges Tragen; und
als Reaktion darauf, dass die Wartezeitdauer zwei Wartezeitdauerinformationen umfasst, Hinzufügen der Wartezeitdauerinformationen, die dem NR-seitigen Träger entsprechen, zu der SN-Hinzufügungsanforderungsnachricht und Senden der SN-Hinzufügungsanforderungsnachricht an den NR-seitigen Träger.

12. Verfahren nach Anspruch 7, wobei der Typ der Zielbasisstation eine LTE-Netzwerkbasisstation ist und das Steuern des UE, sodass es gemäß dem Typ der Zielbasisstation und der Wartezeitdauer in den Ruhestatus übergeht, Folgendes umfasst:
als Reaktion darauf, dass die Wartezeitdauer eine Wartezeitdauerinformation umfasst, Erkennen von Verkehr des UE gemäß der Wartezeitdauerinformation und Steuern des UE, sodass es in einen Ruhestatus übergeht (222); und
als Reaktion darauf, dass die Wartezeitdauer zwei Wartezeitdauerinformationen umfasst, Erkennen von Verkehr des UE gemäß einer längeren Zeitdauer in den zwei Wartezeitdauerinformationen und Steuern des UE, sodass es in einen Ruhestatus übergeht (223).

13. Basisstationsvorrichtung, umfassend:
mindestens einen Prozessor (44); und
einen Speicher (41), der für mindestens ein Programm konfiguriert ist, das bei Ausführung durch den Prozessor (44) bewirkt, dass der Prozessor (44) das Verfahren zum Steuern des Statusübergangs nach einem von Anspruch 1 bis Anspruch 12 vollführt.

14. Speichermedium, auf dem ein Computerprogramm gespeichert ist, das bei Ausführung durch einen Prozessor einer Basisstation bewirkt, dass die Basisstation das Verfahren zum Steuern des Statusübergangs nach einem von Anspruch 1 bis Anspruch 12 vollführt.

## Revendications

1. Procédé permettant de commander la transition d'état d'un équipement utilisateur, UE, possédant un support côté NR et un support côté LTE, réalisée par une station de base source d'un réseau non autonome, NSA, comprenant,
l'acquisition d'informations de mesure de nouvelle radio, NR, à partir du support côté NR, en réponse à une détermination qu'un transfert de l'UE de la station de base source du réseau NSA à une station de base cible d'un autre réseau est en cours de réalisation (101) ;
la détermination d'une durée d'attente sur la base des informations de mesure d'évolution à long terme, LTE, provenant du support côté LTE et des informations de mesure NR (102) ; et
l'envoi de la durée d'attente à la station de base cible pour permettre à la station de base cible de commander l'UE pour passer à un état de repos sur la base de la durée d'attente (103) après le transfert ; **caractérisé en ce que**,
les informations de mesure NR indiquant des informations relatives à une durée d'attente dans le support côté NR de l'UE, la durée d'attente dans le support côté NR de l'UE indique un temps restant que l'UE doit attendre avant de passer à l'état de repos, et les informations de mesure LTE comprenant au moins l'une des informations d'état du support côté LTE ou de la durée d'attente qui s'est écoulée durant laquelle le support côté LTE de l'UE n'a pas de trafic UE.

2. Procédé de la revendication 1, ladite acquisition d'informations de mesure NR à partir d'un support côté NR, en réponse à une détermination qu'un transfert d'un réseau NSA est en cours de réalisation, comprend l'une parmi, l'acquisition d'informations de rétroaction concernant un état actif et/ou un seuil de durée restante avant la transition d'état, en réponse au support côté NR qui se trouve dans l'état actif lorsqu'un message de demande de transfert de réseau est reçu (111) ;
l'acquisition d'informations de rétroaction concernant un état inactif et/ou « 0 » en réponse au support côté NR qui se trouve dans l'état inactif lorsqu'un message de demande de transfert de réseau est reçu (112) ; ou
l'acquisition de la durée restante de rétroaction pour la mesure en réponse au support côté NR qui se trouve dans un état inactif lorsqu'un message de demande de transfert de réseau est reçu (113).

3. Procédé de la revendication 1, ladite détermination d'une durée d'attente sur la base des informations de mesure LTE provenant d'un support côté LTE et des informations de mesure NR comprenant,
l'acquisition des informations de mesure LTE à partir du support côté LTE (122) ; et
la recherche d'une durée d'attente dans une table prédéfinie de correspondance entre informations de mesure et durée, correspondant aux informations de mesure LTE et aux informations de mesure NR (123).

4. Procédé de la revendication 3, ladite table prédéfinie de correspondance entre informations de mesure et durée comprenant la correspondance des informations de mesure LTE, des informations de mesure NR et de la durée d'attente, et ladite correspondance comprenant,
lorsque les informations d'état dans les informations de mesure LTE ou les informations de mesure NR sont des informations concernant un état actif, ladite durée d'attente étant un seuil de durée restante avant la transition d'état ;
lorsque les informations d'état dans les informations de mesure LTE sont des informations concernant un état inactif, et que les informations d'état dans les informations de mesure NR sont des informations concernant un état non inactif, ladite durée d'attente étant une durée restante pour la mesure dans les informations de mesure NR ;
lorsque les informations d'état dans les informations de mesure LTE sont des informations concernant un état non inactif, et que les informations d'état dans les informations de mesure NR sont des informations concernant un état inactif, ladite durée d'attente étant une durée restante pour la mesure dans les informations de mesure LTE ; et
lorsque les informations d'état dans les informations de mesure LTE sont des informations concernant un état non inactif, et que les informations d'état dans les informations de mesure NR sont des informations concernant un état non inactif, ladite durée d'attente étant plus grande que la durée restante pour la mesure des informations de mesure LTE et des informations de mesure NR.

5. Procédé de la revendication 1, ladite détermination d'une durée d'attente sur la base des informations de mesure LTE provenant d'un support côté LTE et des informations de mesure NR comprenant,
l'acquisition des informations de mesure LTE à partir du support côté LTE (132) ; et
la considération d'une durée restante avant la transition d'état dans les informations de mesure LTE et de la durée restante avant la transition d'état dans les informations de mesure NR en tant que durée d'attente (133).

6. Procédé de la revendication 1, ledit envoi de la durée d'attente à une station de base cible pour permettre à la station de base cible de commander un UE pour passer à un état de repos sur la base de la durée d'attente, comprenant,
l'envoi de la durée d'attente à la station de base cible par l'intermédiaire d'un message de demande de transfert de réseau pour permettre à la station de base cible de commander l'UE pour passer à un état de repos.

7. Procédé permettant de commander la transition d'état d'un équipement utilisateur, UE,
réalisé par une station de base cible, comprenant,
la réception, en provenance d'une station de base source,
d'une durée d'attente et la détermination d'un type de la station de base cible (201) ; et
la commande de l'UE, pour passer à un état de repos selon le type de la station de base cible et de la durée d'attente (202) après un transfert de l'UE de la station de base source à la station de base cible ; **caractérisé en ce que**,
la durée d'attente est déterminée sur la base des informations de mesure d'évolution à long terme, LTE, provenant d'un support côté LTE et des informations de mesure de nouvelle radio, NR ; et
la durée d'attente indique un temps que l'UE doit attendre avant de passer à l'état de repos.

8. Procédé de la revendication 7, ledit type de la station de base cible comprenant au moins, une station de base de réseau évolution à long terme, LTE, ou une station de base de réseau non autonome, NSA.

9. Procédé de la revendication 7, ladite réception de la durée d'attente comprenant,
la réception d'un message de demande de transfert de réseau envoyé par une station de base source, et l'extraction de la durée d'attente à partir du message de demande de transfert de réseau.

10. Procédé de la revendication 7, ledit type de la station de base cible étant une station de base de réseau NSA, et ladite commande de l'UE pour passer à l'état de repos selon le type de la station de base cible et la durée d'attente comprenant,
l'envoi de la durée d'attente à un support côté nouvelle radio, NR, par l'intermédiaire d'un message de demande d'ajout SN pour permettre au support côté NR de détecter le trafic de l'UE selon la durée d'attente (212) ;
la détection, par un support côté LTE, du trafic de l'UE selon la durée d'attente (213) ; et
le passage de l'UE à un état de repos en réponse à une détermination que le support côté LTE et le support côté NR sont tous deux dans un état inactif (214).

11. Procédé de la revendication 10, ledit envoi de la durée d'attente à un support côté NR par l'intermédiaire d'un message de demande d'addition SN comprenant,
en réponse à la durée d'attente comprenant un élément d'informations de durée d'attente, l'ajout des informations de durée d'attente au message de demande d'ajout SN, et l'envoi du message de demande d'ajout SN à un palier côté NR ; et
en réponse à la durée d'attente comprenant deux éléments d'informations de durée d'attente, l'ajout des informations de durée d'attente correspondant au support côté NR au message de demande d'ajout SN, et l'envoi du message de demande d'ajout SN au support côté NR.

12. Procédé de la revendication 7, ledit type de la station de base cible étant une station de base de réseau LTE, et ladite commande de l'UE pour passer à l'état de repos selon le type de la station de base cible et la durée d'attente comprenant,
en réponse à la durée d'attente comprenant un élément d'informations de durée d'attente, la détection du trafic de l'UE selon les informations de durée d'attente, et la commande de l'UE pour passer à un état de repos (222) ; et
en réponse à la durée d'attente comprenant deux éléments d'informations de durée d'attente, la détection du trafic de l'UE selon une durée plus longue dans les deux éléments d'informations de durée d'attente, et la commande de l'UE pour passer à un état de repos (223).

13. Appareil de station de base, comprenant,
au moins un processeur (44) ; et
une mémoire (41) configurée pour au moins un programme qui, lorsqu'il est exécuté par le processeur (44), amène le processeur (44) à effectuer le procédé permettant de commander la transition d'état selon l'une quelconque de la revendication 1 à la revendication 12.

14. Support de stockage stockant un programme informatique qui, lorsqu'il est exécuté par un processeur d'une station de base, amène la station de base à effectuer le procédé permettant de commander la transition d'état selon l'une quelconque de la revendication 1 à la revendication 12.
